(19) Europäisches Patentamt
European Patent Office
Office européen des brevets

(11) Veröffentlichungsnummer: **0 066 225**
A2

# (12) EUROPÄISCHE PATENTANMELDUNG

(21) Anmeldenummer: 82104500.2

(22) Anmeldetag: 24.05.82

(51) Int. Cl.$^3$: B 60 C 9/18
B 60 C 15/00

(30) Priorität: 03.06.81 DE 3122015

(43) Veröffentlichungstag der Anmeldung: 08.12.82 Patentblatt 82/49

(84) Benannte Vertragsstaaten: AT BE DE FR GB IT LU SE

(71) Anmelder: BAYER AG
Zentralbereich Patente, Marken und Lizenzen
D-5090 Leverkusen 1, Bayerwerk(DE)

(72) Erfinder: Ippen, Jakob, Dr.
Schleiermacher Strasse 17
D-5090 Leverkusen 1(DE)

(72) Erfinder: Stüttgen, Friedel
Albrecht-Dürer-Strasse 94
D-5024 Pulheim(DE)

## (54) Fahrzeugreifen mit spezieller Verstärkung des Gürtels und des Reifenfusses.

(57) Ein insbesondere für Lastkraftwagen geeigneter Fahrzeugreifen, der oberhalb und unterhalb des Stahlgürtels und in der äußeren Schicht des Reifenfußes durch einen Kautschuk mit hoher Härte verstärkt ist.

EP 0 066 225 A2



Croydon Printing Company Ltd.

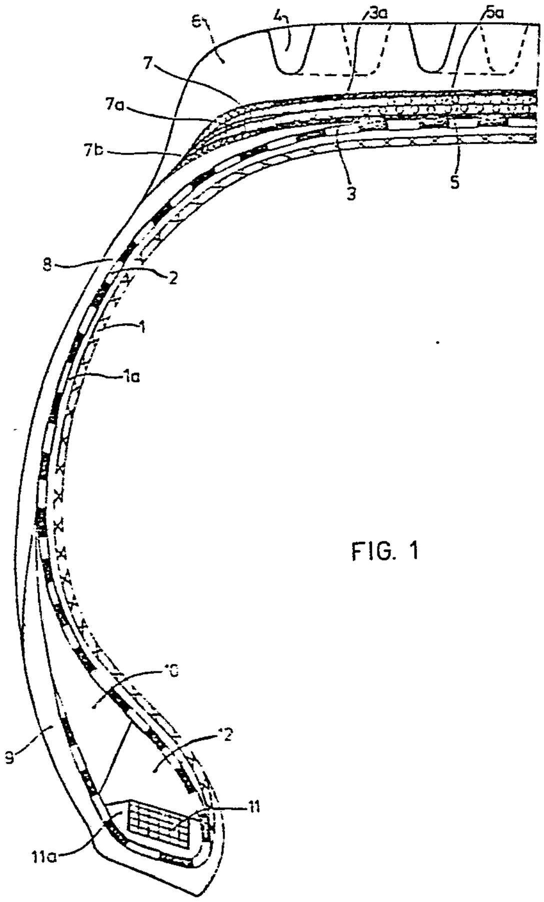


FIG. 1

BAYER AKTIENGESELLSCHAFT 5090 Leverkusen, Bayerwerk
Zentralbereich
Patente, Marken und Lizenzen Kb/kl-c

# Fahrzeugreifen mit spezieller Verstärkung des Gürtels und des Reifenfußes

Die Erfindung betrifft einen insbesondere für Lastkraftwagen geeigneten Fahrzeugreifen, der oberhalb und unterhalb des Stahlgürtels eine Kautschuklage mit hoher Härte von über 95 Shore A enthält und bei dem die äußere Schicht des Reifenfußes teilweise oder vollständig ebenfalls aus einem solchen Kautschuk mit hoher Härte besteht.

Herkömmliche Radialreifen für Lastkraftwagen besitzen unterhalb der Lauffläche einen Stahlgürtel, der im allgemeinen vier, mindestens jedoch drei, Stahlgürtellagen enthält und haben eine Karkasse mit einer Stahleinlage, die gegebenenfalls durch eine Polyamidfasereinlage ersetzt sein kann. Im Reifenfuß weisen solche Reifen eine zusätzliche Stahlverstärkung am Umschlagsende der Karkasse auf. Da demnach als Verstärkungsmaterial im Reifen fast ausschließlich Stahlcord verwendet wird, ist das Gewicht des Reifens recht hoch und daher wirtschaftlich ungünstig. Ein weiterer Nachteil

eines derartigen Reifens ist es, daß nach etwa 100 000 km Laufleistung im Reifenfuß unterhalb der Karkasse oder des Wulstbandes Deformationen auftreten können, so daß nach eine Runderneuerung des Reifens der notwendige passende Sitz auf der Felge nicht mehr gewährleistet ist.

Aufgabe der Erfindung ist es daher, einen Reifen bereitzustellen, bei dem Fußdeformationen vermieden und weniger Stahlgürtellagen benötigt werden. Außerdem soll der Reifen ein geringeres Gewicht als herkömmliche Reifen haben.

Die Aufgabe wird dadurch gelöst, daß der Gürtel- und Fußbereich des Reifens durch einen Kautschuk mit hoher Härte von über 95 Shore A verstärkt ist, wobei keine Cordeinlagen im Kautschuk erforderlich sind. Für den Reifen sind statt der üblichen vier nur noch zwei Stahlgürtellagen erforderlich. Im Reifenfuß werden, außer dem üblichen Stahldrahtkern, keine zusätzlichen Stahlverstärkungen benötigt. Das Gewicht des Reifens liegt 5 bis 10 % unter dem eines vergleichbaren Radialreifens.

Gegenstand der Erfindung ist ein Reifen mit Stahlgürtel, Einlagenkarkasse und Reifenfuß mit Stahldrahtkern, dadurch gekennzeichnet, daß sich oberhalb und unterhalb des Stahlgürtels eine Lage aus einem Kautschuk mit hoher Härte von über 95 Shore A befindet und daß die äußere Schicht des Reifenfußes ebenfalls aus einem Kautschuk mit hoher Härte von über 95 Shore A besteht, der direkt an der Karkasse anliegt.

In einer Ausführungsform besitzt der Reifen eine doppelte Karkasse, die im Reifenfuß eine Kautschukschicht mit hoher Härte von über 95 Shore A enthält.

Vorzugsweise besteht die Stahldrahtkernumhüllung im Innenteil des Reifenfußes ebenfalls aus einem solchen Kautschuk mit hoher Härte. Besonders bevorzugt besteht diese Kernumhüllung aus einem vorvulkanisierten Unterteil und einem nicht vorvulkanisiertem Oberteil. In einer anderen bevorzugten Ausführungsform ist die gesamte Kernumhüllung vorvulkanisiert und besitzt unterhalb des Stahldrahtkerns eine Trennfuge. Der Stahldrahtkern im Reifenfuß hat vorzugsweise die Form eines Rhomboeders oder Parallelogramms.

Als Kautschuk mit hoher Härte gemäß vorliegender Erfindung werden Natur- oder Synthesekautschuk oder deren Gemische mit einer Härte von über 95 Shore A eingesetzt, die beispielsweise durch Zusatz eines Phenol-Formaldehyd-Harzes (Novolak) modifiziert sind. Vorzugsweise sind diese Phenol-Formaldehyd-Harze über Urethan- oder Harnstoffgruppen vernetzt.

In den Figuren 1 - 3 sind Querschnitte durch verschiedene Ausführungsformen des erfindungsgemäßen Reifens dargestellt.

Figur 1 zeigt den Reifen mit Karkasse, bestehend aus (1) gasundurchlässiger Innenplatte (Tubeless-Platte), (1a) Haftschicht und (2) Karkasseneinlage aus Stahlcord oder Polyamidfaser; (6) Lauffläche mit (4) Profileinschnitten; (5) untere Stahlgürtellage, deren Stahlcordfäden in einem Winkel zur Laufrichtung angeordnet sind, (5a) obere Stahlgürtellage, deren Stahlcordfäden in entgegengesetzter Richtung unter gleichem Winkel zur Laufrichtung angeordnet sind, (3) untere Gürtellage (Untergürtel) und (3a) obere Gürtellage (Obergürtel) aus einem Kautschuk mit hoher Härte (7), (7a) und (7b) übliche, besonders elastische Gürtelkanten-Schutzanlagen; (8) Seitenwand des Reifens; (9) äußere Schicht des Reifenfußes aus einem Kautschuk mit hoher Härte, die zusammen mit dem Karkassenumschlag die Festigkeitseigenschaften des Reifenfußes verstärkt; Innenteil des Reifenfußes mit (10) üblichem, hochelastischem Kautschuk-Innenkern, (11) Stahldrahtkern und Kernumhüllung aus einem Kautschuk mit hoher Härte bestehend aus (11a) einem vorvulkanisierten Unterteil und (12) nicht vorvulkanisiertem Oberteil.

Figur 2 zeigt einen Reifen mit gleichem Reifenfuß wie in Figur 1 aber mit einer anderen Ausführungsform des Gürtels. Wie in Figur 1 bedeutet (1) gasundurchlässige Inneplatte, (1a) Haftschicht, (2) Karkasseneinlage, (6) Lauffläche mit (4) Profileinschnitten, (5) untere und (5a) obere Stahlgürtellage, (3) untere Gürtellage und (3a) obere Gürtellage aus einem Kautschuk mit hoher Härte, (7), (7a) und (7b) Gürtelkanten-Schutzlagen, (8) Seitenwand, (9) äußere Schicht des Reifenfußes aus einem Kautschuk mit hoher Härte (10) Kautschuk-Innenkern,

(11) Stahldrahtkern, (11a) vorvulkanisiertes Unterteil und (12) nicht vorvulkanisiertes Oberteil der Kernumhüllung mit hoher Härte.

Figur 3 zeigt einen erfindungsgemäßen Reifen mit doppelter Karkasse, die im Reifenfuß durch eine Kautschukschicht mit hoher Härte verstärkt ist, wobei der Stahldrahtkern im Reifenfuß eine mit einer Trennfuge versehene einheitliche Umhüllung aus vorvulkanisiertem Kautschuk besitzt. Der Gürtel des Reifens ist so gestaltet, daß die beiden Stahlcordlagen von den beiden harten Kautschuklagen umhüllt sind, wodurch die sonst erforderlichen Gürtelkanten-Schutzlagen entfallen. In Figur 3 bedeuten (1) gasundurchlässige Innenplatte, (2) Karkasseneinlage, (6) Lauffläche mit (4) Profileinschnitten, (5) untere und (5a) obere Stahlgürtellage, (3) untere und (3a) obere Gürtellage, die in der Gürtelkante zusammenlaufen und aus einem Kautschuk mit hoher Härte bestehen, (8) Seitenwand, (9) und (9a) äußere Schicht des Reifenfußes, (9b) Kautschukschicht in der Karkasse, wobei (9), (9a) und (9b) aus einem Kautschuk mit hohem Elastizitätsmodul (Stoßelastizität über 50 %) bestehen und (9a) und (9b) auf die Karkasse aufdoubliert sind, (10) Kautschuk-Innenkern, (11) Stahldrahtkern und (11a) Kernumhüllung aus vorvulkanisiertem Kautschuk mit hoher Härte und Trennfuge unterhalb des Stahldrahtkerns.

Die erfindungsgemäßen Reifen können auf herkömmlichen Maschinen hergestellt und in üblichen Vulkanisationspressen abgeheizt werden. Die üblichen Bauteile des Reifens werden aus dafür bekannten Kautschuken hergestellt. Für die Bauteile des Reifens, die erfindungsgemäß aus einem Kautschuk mit hoher Härte bestehen, werden beispielsweise Kautschuke eingesetzt, die übliche Zusätze wie Füllstoffe, Alterungsschutzmittel, Ruße und Beschleuniger enthalten und außerdem auf 100 Gew.-Teile Kautschuk 10 - 40, vorzugsweise etwa 15 Gew.-Teile Phenol-Formaldehyd-Harz (Novolak), das durch folgende allgemeine Formel beschrieben werden kann:

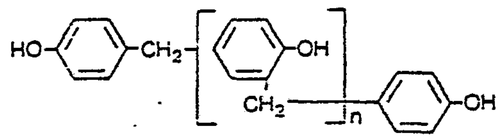

Im folgenden sind 3 Beispiele für derart modifizierte Kautschuke und ihre Eigenschaften angegeben.

Beispiel 1

| | |
|---|---|
| Naturkautschuk | 75 Gew.-Teile |
| cis-1,4-Polybutadien | 25 Gew.-Teile |
| Phenol-Formaldehyd-Harz | 15 Gew.-Teile |

Eigenschaften

| | | |
|---|---|---|
| Mischungselastizität / 80°C<br>Defo-Härte / Defo-Elastizität | | 2250/11 |
| Zugfestigkeit | (MPa) | 14,1 |
| Bruchdehnung | (%) | 270 |
| Spannungswert bei 100 % Dehnung | (MPa) | 6,5 |
| Weiterreißfestigkeit nach Pohle | (N) | 180 |
| Härte bei 20°C | (Shore A) | 96 |

Beispiel 2

| | |
|---|---|
| Naturkautschuk | 57 Gew.-Teile |
| Styrol-Butadien-Kautschuk | 43 Gew.-Teile |
| Phenol-Formaldehyd-Harz | 15 Gew.-Teile |

Eigenschaften

| | | |
|---|---|---|
| Mischungselastizität / 80°C<br>Defo-Härte / Defo-Elastizität | | 4550/15 |
| Zugfestigkeit | (MPa) | 14,3 |
| Bruchdehnung | (%) | 110 |
| Spannungswert bei 100 % Dehnung | (MPa) | 13,1 |
| Weiterreißfestigkeit nach Pohle | (N) | 150 |
| Härte bei 20°C | (Shore A) | 98 |

Beispiel 3

| | |
|---|---|
| Naturkautschuk | 75 Gew.-Teile |
| cis-1,4-Polybutadien | 25 Gew.-Teile |
| Phenol-Formaldehyd-Harz | 15 Gew.-Teile |

Eigenschaften

| | | |
|---|---|---|
| Mischungselastizität / 80°C<br>Defo-Härte / Defo-Elastizität | | 2550/17 |
| Zugfestigkeit | (MPa) | 13,1 |
| Bruchdehnung | (%) | 130 |
| Spannungswert bei 100 % Dehnung | (MPa) | 9,9 |
| Weiterreißfestigkeit nach Pohle | (N) | 160 |
| Härte bei 20°C | (Shore A) | 96 |

Das Verhältnis von Höhe zu Breite des erfindungsgemäßen Reifens beträgt 0,3 - 1,1:1, vorzugsweise 0,5 - 0,8:1.

Patentansprüche

1. Reifen mit Stahlgürtel, Einlagenkarkasse und Reifenfuß mit Stahldrahtkern, dadurch gekennzeichnet, daß sich oberhalb und unterhalb des Stahlgürtels eine Lage aus einem Kautschuk mit hoher Härte von über 95 Shore A befindet und daß die äußere Schicht des Reifenfußes ebenfalls aus einem Kautschuk mit hoher Härte von über 95 Shore A besteht, der direkt an der Karkasse anliegt.

2. Reifen nach Anspruch 1, dadurch gekennzeichnet, daß der Reifen eine doppelte Karkasse besitzt, die im Reifenfuß eine Kautschukschicht mit hoher Härte von über 95 Shore A enthält.

3. Reifen nach Anspruch 1, dadurch gekennzeichnet, daß die Stahldrahtkernumhüllung im Innenteil des Reifenfußes aus einem Kautschuk mit hohem Elastizitätsmodul (Stoßelastizität über 50 %) besteht.

4. Reifen nach Anspruch 3, dadurch gekennzeichnet, daß die Kernumhüllung aus einem vorvulkanisierten Unterteil und einem nicht vorvulkanisierten Oberteil besteht.

5. Reifen nach Anspruch 2 und 3, dadurch gekennzeichnet, daß die gesamte Kernumhüllung vorvulkanisiert ist und unterhalb des Stahldrahtkerns eine Trennfuge besitzt.

6. Reifen nach Anspruch 1, dadurch gekennzeichnet, daß der Stahldrahtkern im Reifenfuß die Form eines Rhomboeders oder Parallelogramms hat.

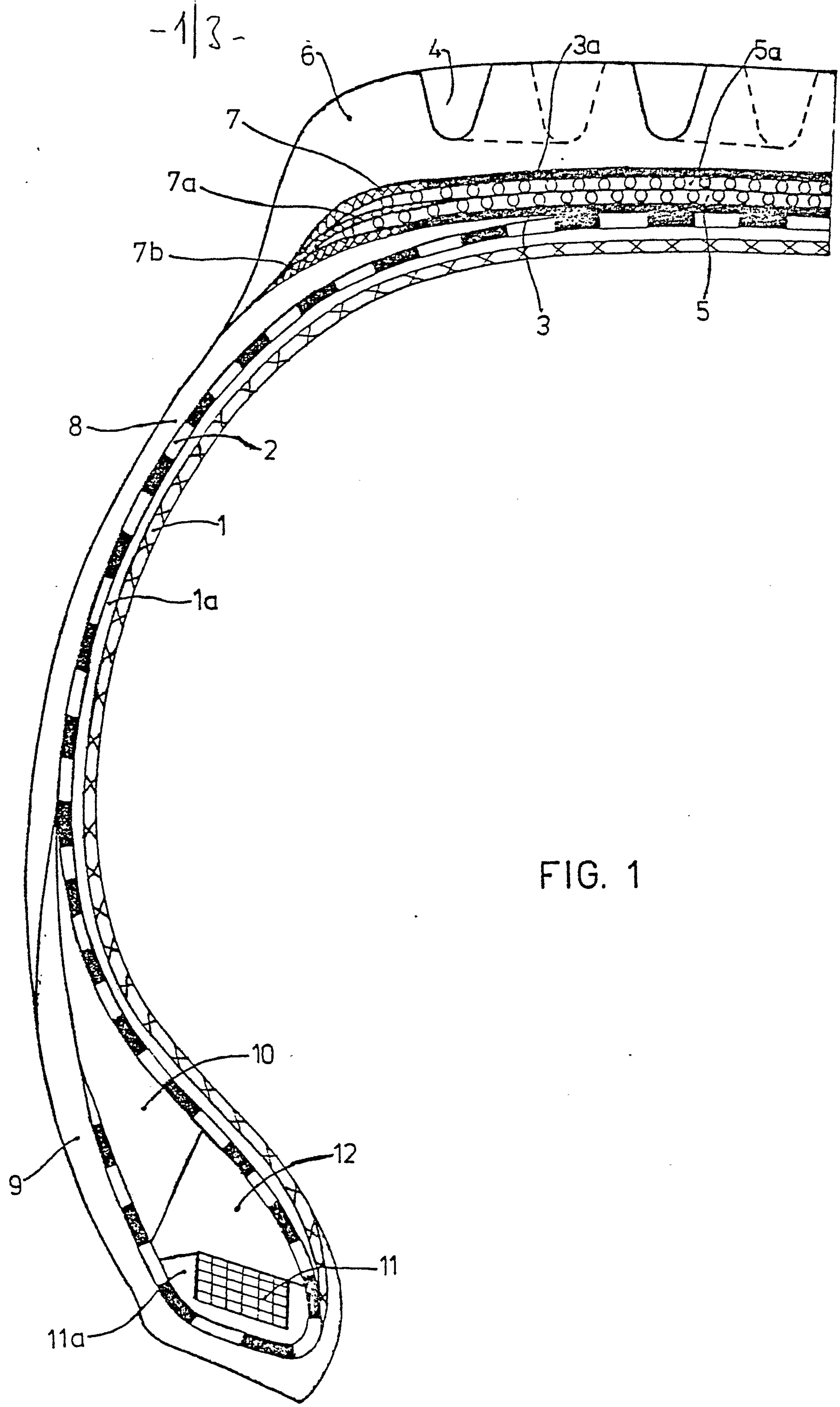


FIG. 1

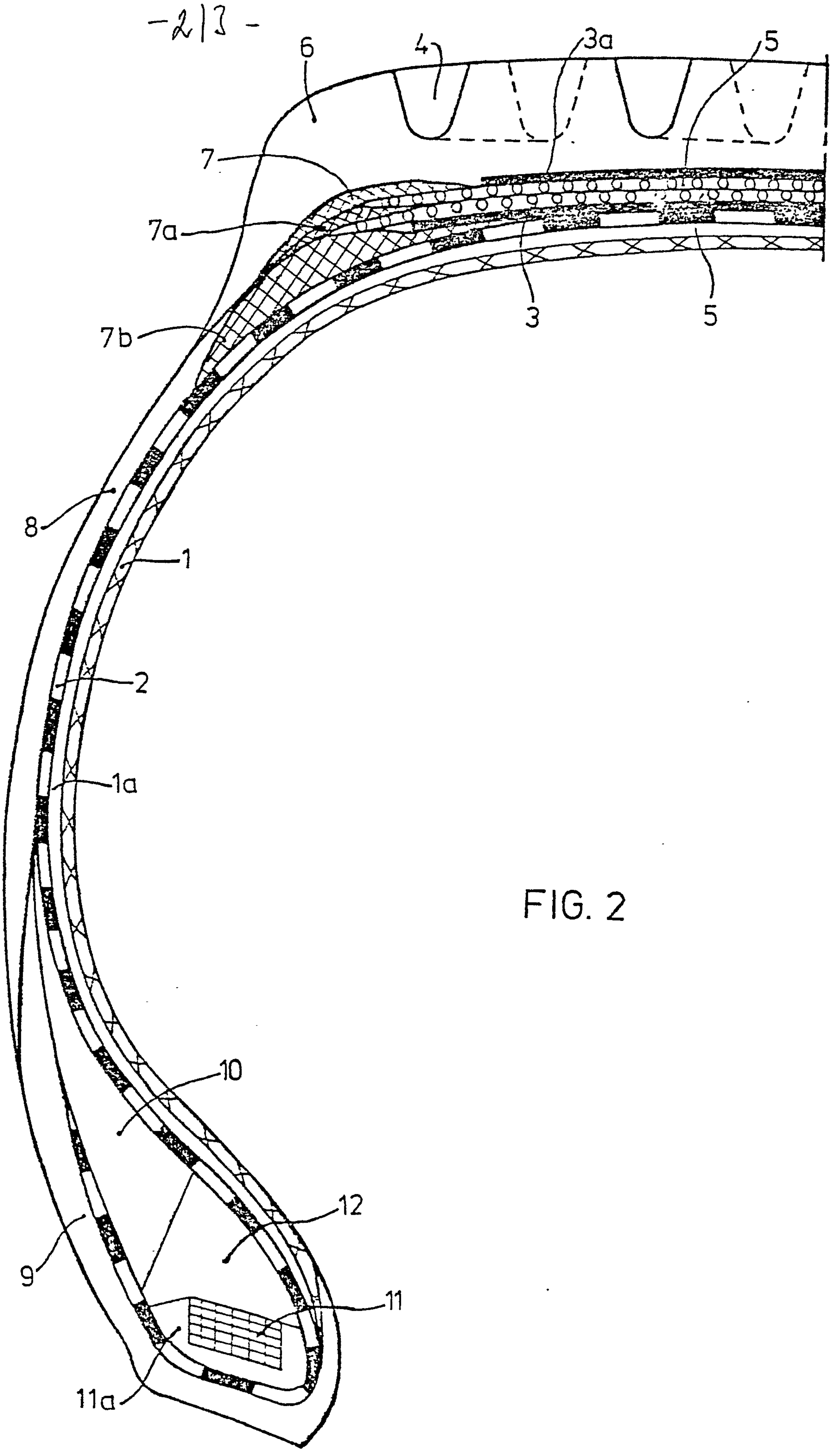


FIG. 2

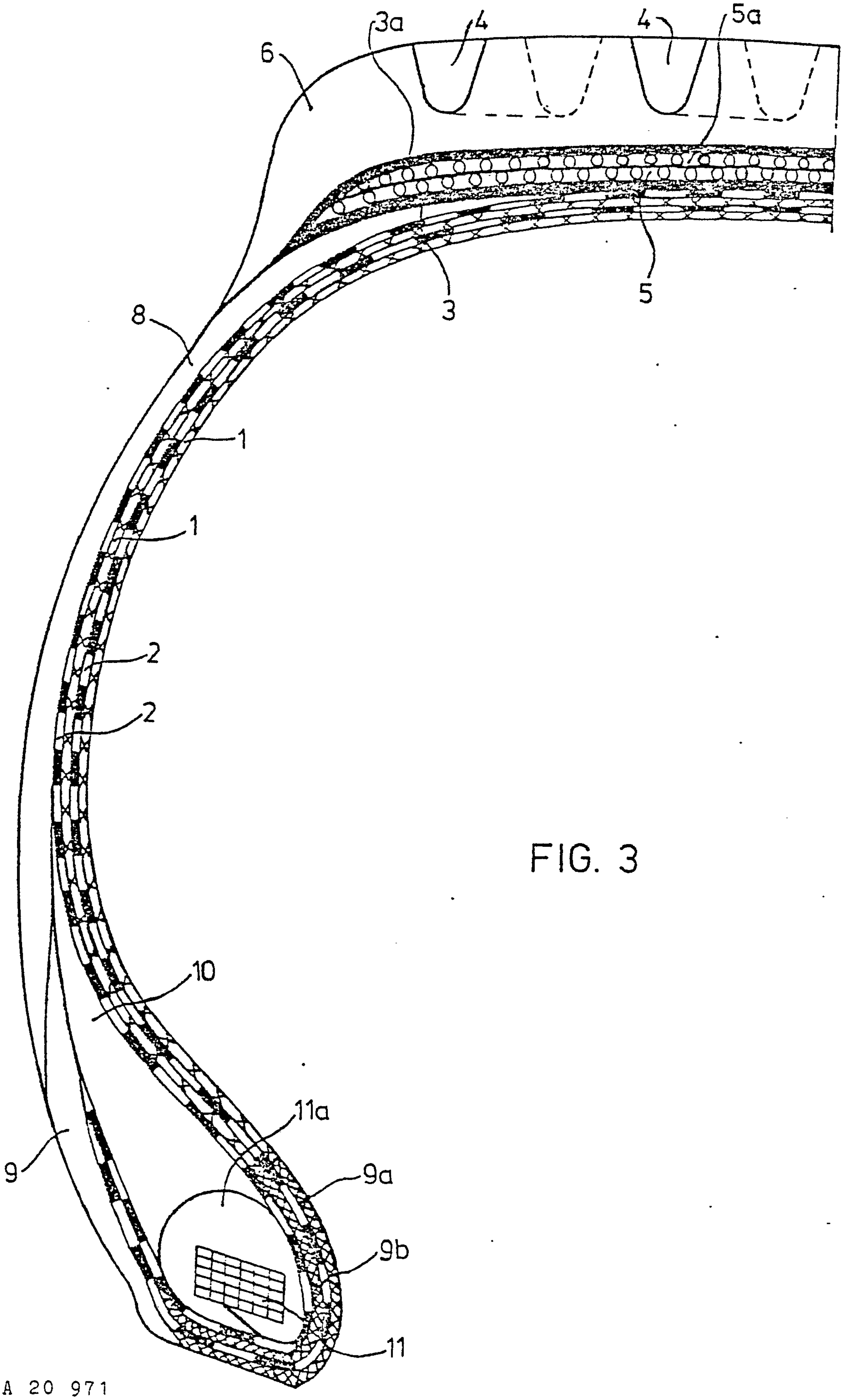


FIG. 3